# EUROPEAN PATENT APPLICATION

(11) **EP 2 280 208 A1**
(43) Date of publication of application: **02.02.2011**
(21) Application number: 09425300.2
(22) Date of filing: 28.07.2009
(51) Int. Cl.: F16L 25/00, F16L 37/12

(54) **Quick coupling for female threaded terminals or terminals with a similar connection profile**

(71) Applicant: Faster S.P.A., 20124 Milano (IT)
(72) Inventor: Pedrazzini, Gianpietro, 20060 Pozzuolo Martesana (IT); Manfredi, Luca, 26027 Rivolta d'Adda (IT)
(74) Representative: Borsano, Corrado

(57) **Abstract**

The present invention relates to a quick coupling for threaded terminals, in particular for female terminals, suitable to allow quick coupling without the need to screw the male seat onto the female seat to be coupled.

The quick coupling according to the present invention is characterized by the fact that it comprises a central body suitable to abut against the front surface of the threaded terminal to be connected, and an inner body movable axially with respect to the central body and which can be operated, in the axial movement thereof, by the operator through a simple thrust action on an appropriate outer element, so that coupling and decoupling of the gripping means of the terminal can be performed in a simple and safe manner by the operator, using only one hand.

## Description

The present invention relates to a quick coupling for threaded terminals or terminals with a similar connection profile suitable to allow quick coupling without the need to screw the male terminal into the female seat to be coupled.

It is known that in many applications, for example for test and inspection of equipment and machinery at the end of the assembly line, it is necessary to connect said equipment to a fluid or compressed air line. Therefore, it is very important to reduce the times required by the operator to perform functional tests or inspections, and in order to contribute to this reduction of inspection times, it is useful for the operator not to lose time in manual operations for connection and disconnection of couplings, which can also entail clamping by screwing and therefore in some cases may also require the use of specific wrenches or tools. The times required by the operator to perform these operations have a relevant impact on the duration of tests, and therefore constitute a limit to the productivity of the line.

It would therefore be advantageous to accelerate and facilitate the actions to be performed by the operator in order to connect the line to be tested, although it is important for these operations to maintain a high level of safety, as tests are often performed by connecting a pressurized fluid line operating with pressure values which can be very high, even in the order of hundreds of atmospheres. Moreover, a drawback found during connection of machinery/equipment is also related to the wide range of different tolerances of threads. Given the high tolerance of threads and given the many different profiles thereof, it is very difficult to produce a coupling which can, with minimum adjustments, be adapted to these couplings with a very wide tolerance, so that the same coupling can be used to couple a plurality of threaded terminals.

The main aim of the present invention is therefore to eliminate or reduce the aforesaid drawbacks.

Within this aim, an object of the present invention is therefore to provide a quick coupling which allows acceleration and simplification of the operation for connection to a threaded terminal or terminal provided with a similar coupling profile, allowing connection to the terminal without the need to perform screwing operations, except in the event of further safety devices being provided to prevent accidental release, and without requiring the aid of special tools or equipment, as the connection can be made manually.

A further object of the present invention is to provide a quick coupling which offers a high level of safety for the operator, which in particular translates into the possibility of checking, simply and immediately, even visually, that connection is correct, i.e. whether coupling has been performed correctly.

Moreover, yet another object of the present invention is to provide a quick coupling capable of being coupled to threaded terminals within a wide range of tolerances, and also couplable to threads having different profiles.

A further object of the present invention is to allow safe coupling also in the event of high pressures.

This task and these and other objects which will be more apparent below, are achieved by a quick coupling for connecting female threaded or shaped terminals comprising gripping means of the threaded or shaped terminal provided with radial movement, said radial movement being controlled through the action of a ring nut external to the coupling movable in axial direction substantially between two positions.

Further features and advantages of the present invention will be more apparent from the detailed description below, provided by way of non-limiting example and illustrated in the accompanying figures, wherein:
Fig. 1 shows a perspective overall view of the quick coupling according to the present invention;
Fig. 2 shows a partly sectional front view with a longitudinal plane of the quick coupling according to the present invention;
Fig. 3 shows a schematic view of the quick coupling according to the present invention partly disassembled, in particular showing the main block;
Fig. 4 shows a perspective view of a component of the quick coupling according to the present invention;
Figs. 5, 6 and 7 show some steps of the coupling cycle of the device according to the present invention in longitudinal section, the coupling having axial symmetry with respect to the longitudinal axis A-A.

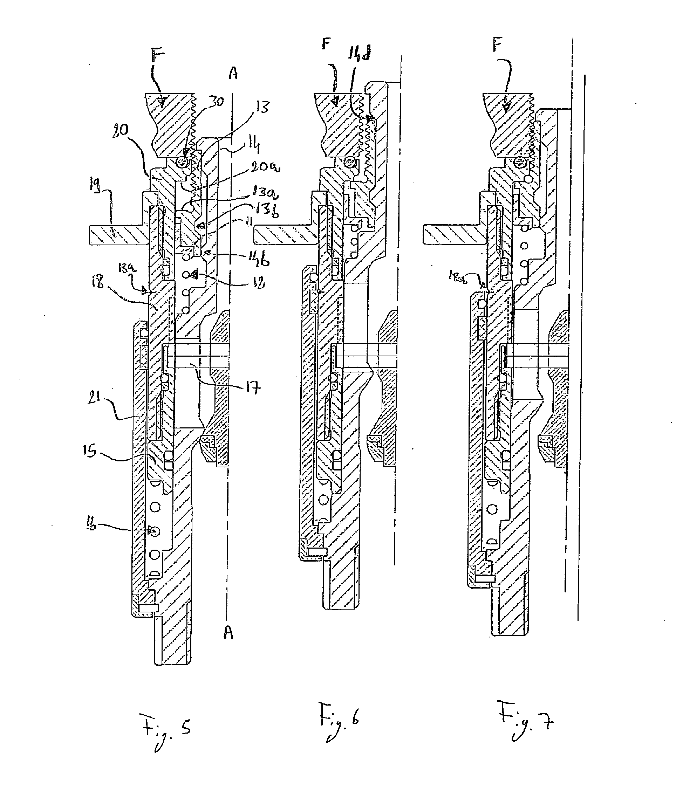

According to a preferred embodiment of the present invention shown in the aforesaid figures by way of non-limiting example, the quick coupling according to the present invention, indicated generically with the reference number **1**, has two ends, a first end **1a** suitable to receive a female threaded or shaped terminal, indicated generically with **F** in figs. 5 to 7, and a second end **1b** suitable to be connected, for example, to a duct suitable to transport pressurized fluid.

The coupling **1** according to the preferred embodiment shown here by way of example, has a substantially cylindrical structure, and therefore axial symmetry with respect to the axis **A** indicated in the figures. The axis A also identifies the axis of symmetry of the main inner duct **14a** which allows pressurized fluid to flow through the coupling.

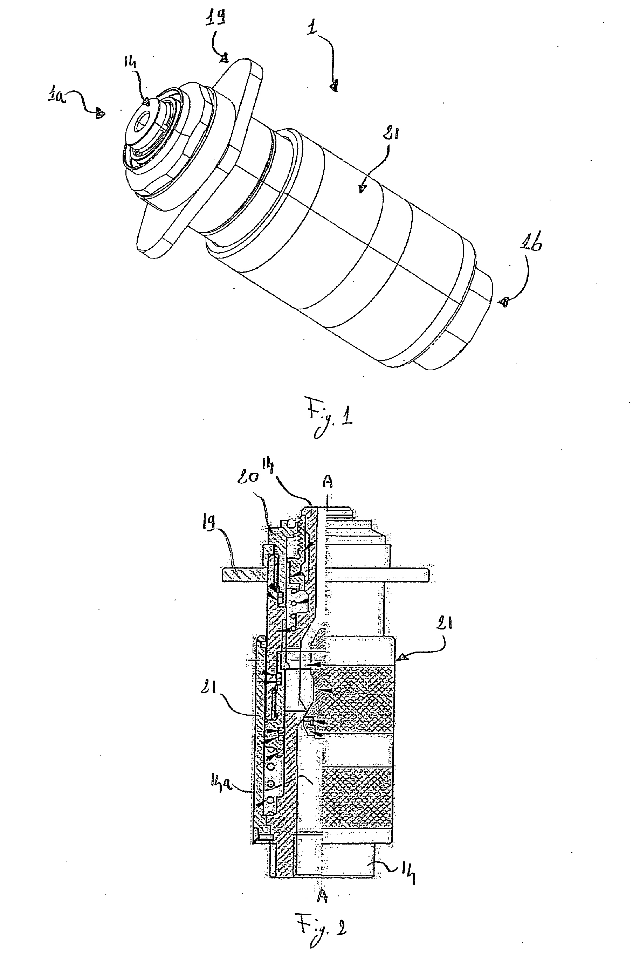

With particular reference to Figs. 1 and 2, the coupling according to the present invention is extremely simple externally, so that it can be easily handled by the operator in total safety, while internally it is provided with a plurality of components suitable to mutually interact in such a manner as to produce the functionality of the coupling.

In more detail, the coupling **1** according to the present invention comprises an inner body **14** visible both from the sections of Figs. 5 to 7 and in the perspective overall view of Fig. 1. The inner body **14** has a substantially hollow cylindrical structure, optionally with variations in the section of the main inner duct **14a** for fluid flow which are functional, for example, to the use of a fluid cut-off valve, and is advantageously a monoblock body.

The inner body **14** abuts against an outer element **21.** The outer element **21** is has a substantially hollow cylindrical shape, so that it can be easily and comfortably gripped by the operator. With particular reference to Figs. 5 to 7, it can be seen that the inner body **14** is stably connected to the ring nut **21,** so that the two components can move in axial direction as a single body. Advantageously, the outer hollow cylindrical element 21 is structured like a ring nut with an appropriately shaped surface, for example knurled, to further facilitate gripping by the operator.

Numerous other components are provided between the outer ring nut **21** and the inner body **14,** in particular a central body **20** is provided, suitable to abut against the threaded or shaped terminal **F** schematized in Figs. 5 to 7. The central body **20** in turn has axial symmetry with respect to the axis **A** and is structured so as to abut stably against the central connector element **18,** also having a hollow cylindrical structure, which in turn abuts against a rear body **15** also with a hollow cylindrical structure. The elements **15, 18** and **20** are therefore structured so as to mutually abut so that they can translate along the axial direction identified by the axis of symmetry **A** as if they were a single body. A coil spring **16** acts between said rear body **15** and said inner body **14,** exerting a force that tends to move the two components away from each other.

While the outer ring nut **21** and the inner body **14** are therefore constrained to move integrally, the central body **20,** the central connector **18** and the rear body **15** are mutually constrained, while further gripping means of the threaded or shaped terminal are also provided between the elements **15, 18** and **20** and said inner body.

In more detail, said gripping means comprise a substantially hollow cylindrical element **13** divided into two or more sectors, preferably at least three sectors. Said sectors or jaws **13** have threaded or shaped inner surfaces so as to match the thread or shaping of the threaded or shaped terminal F. With reference to the sections of Figs. 5 to 7, said sectors or jaws **13** abut against a slider ring **11** movable with respect to said central body **20** and which in turn abuts against a coil spring **12** which acts between said slider **11** and the inner body **14** in the direction to move said two elements away from each other.

On the outer surface of said inner body **14** facing the inner surface of said sectors or jaws **13** an abutment ring **14b** is conveniently provided, protruding towards the inner surface of said jaws **13** and suitable to interact, by insertion therein, with a corresponding annular groove **13b**,. Preferably, said abutment **14b** and said groove **13b** have a substantially trapezoidal profile, in the plane of the cross section of Figs. 5 to 7, so that in the relative sliding movement between the inner body **14** and the sectors **13,** insertion and extraction of the abutment **14b** in and from said groove **13b** is facilitated.

Again with reference to Figs. 5 to 7, a disconnection handle **19** is shown, integrally associated with said central body **20** and with said central connector **18.**

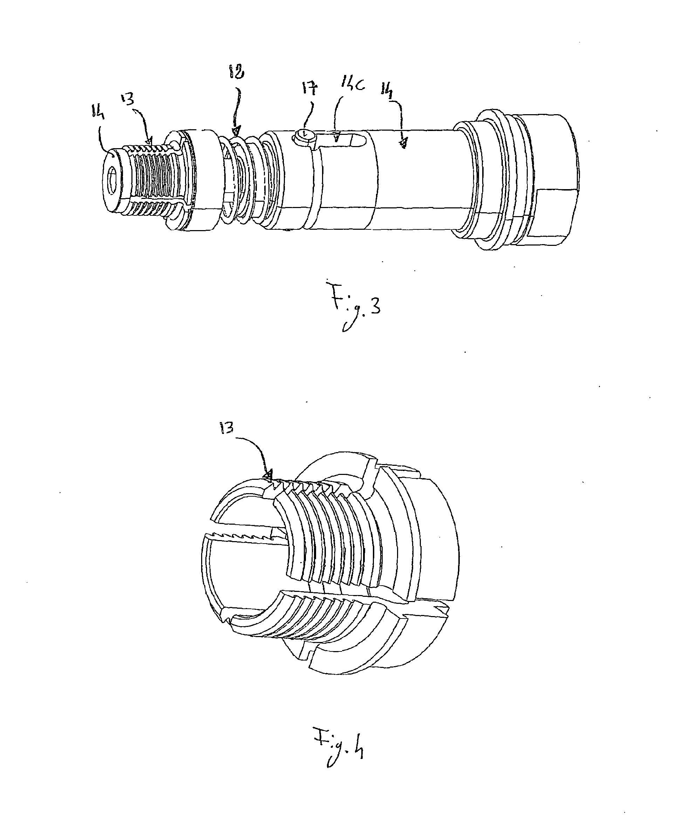

Advantageously, the quick coupling according to the present invention also comprises a cut-off valve of the fluid flowing through the main inner duct **14a.** Said cut-off valve can advantageously comprise a valve body **10,** self-centring and supported by a transverse pin **17** suitable to be inserted in specific guiding grooves **14c** produced in diametrically opposed position on the surface of said inner body **14,** as can be seen for example in Fig. 3. As said pin can slide in the guiding grooves **14c,** it allows translation of the valve body **10** in axial direction between a position in which the valve is completely open and the fluid is free to flow, visible in Fig. 7, and a position in which the valve body **10** abuts against the inner surface of the inner body **14,** occluding the main inner duct **14a** and preventing flow of the fluid, said position being visible in Fig. 5. Translation of the valve in axial direction is imparted by the movements of the rear body 15 and of the central connector **18,** which as mentioned are integral with each other, as said pin **17** is constrained, by means of two abutments, to move integrally with these two components, as shown in Figs 5 to 7.

Operation of the quick coupling according to the present invention is as follows.

When a threaded or differently shaped female terminal **F** is to be connected to the quick coupling **1** according to the present invention, the operator positions the coupling **1** on the terminal as shown in Fig. 5. The central body **20** of the coupling abuts against the front surface of said terminal F, through a front sealing gasket indicated with the reference number **30** which allows a hermetic seal to be formed to prevent fluid from escaping.

At this point the operator only requires to push the coupling 1 towards the terminal F exerting thrust in a substantially axial direction. As the operator grips the coupling holding it by the ring nut **21,** when the operator exerts the thrust action in axial direction the terminal **F** prevents forward movement of the central body **20** but does not prevent translation in axial direction of the inner body **14,** integral with the ring nut **21.**

With reference to Figure 5 it can be noted that when the terminal **F** is not coupled to the coupling, the valve body **10** obstructs the main duct **14a.**

Movement of the ring nut **21** by the operator brings the front gasket **30** to rest against the face of the terminal **F** to be coupled and, at the same time, as the ring nut **21** is constrained to the inner body **14,** this latter also moves forward in axial direction inside the threaded or shaped seat of the female terminal **F,** as shown in Fig. 6.

Again with reference to Fig. 6, as the central connector **18** and the rear body **15** are integral with the central body **20,** when the inner body **14** moves axially towards the inside of the female connection **F** to be connected, the pin **17** that supports the valve body maintains the valve body in position and a space for fluid to flow through opens inside the main duct **14a.**

When the coupling is in the uncoupled position in Fig. 5, said inner body **14** abuts against said jaws **13** maintaining them in an expanded position. In particular, the abutment **14b** abuts against the inner surface of the sectors **13** maintaining them in an expanded position. When the inner body **14** moves towards the terminal **F** drawn by the ring nut **21,** said abutment **14b** is inserted in the groove **13b** conveniently provided on said sectors **13,** the sectors are no longer constrained radially and therefore the cylindrical element divided into sectors **13** closes, guided in the radial movement by the structure of the profile of the outer surface of the inner body **14.** The gripping means **13** can optionally be surrounded by an elastic element, such as an O-ring, which surrounds the jaws **13** facilitating closing thereof, but due to the structure of the inner surface of the end of the inner body **14,** this O-ring is not necessary but optional. Closing of the jaws allows insertion thereof inside the female terminal **F.** Movement the jaws in radial and axial direction is guided by the shaped profile of the inner body **14,** as is visible in Figs. 5 to 7.

Likewise, forward movement of the inner body **14** can take place until this inner body **14** abuts against the rear body **15,** simultaneously compressing the coil spring **16.**

The position is visible in Fig. 6. The inner body **14** has reached the end of its travel as it is abutting against the rear body **15,** the spring **16** is compressed. The abutment **14b** is inserted inside the groove **13b** and therefore the jaws **13** have closed towards the inside of the coupling. The jaws **13** have also reached the end of their travel in axial direction as they abut against the central body **20.** The slider **11** which abuts against the jaws **13** from below, in this position is thrust towards the end **1a** of the coupling by the coil spring **12** which acts between said slider **11** and said inner body **14.**

When the operator stops pushing the ring nut **21,** the inner body **14** can once again project from the female terminal **F.** During retraction of the inner body **14,** the abutment **14b** projects from the groove **13b** again causing the jaws **13** to expand and produce the grip on the outer thread of the terminal **F.** During retraction of the inner body **14** the jaws remain in their position of maximum insertion inside the female terminal **F** due to the thrust action exerted by the spring **12** on the slider **11.** Moreover, at the end of said inner body **14** facing the end **1 a** of said coupling **1,** the outer surface of said inner body **14** preferably has a variation of diameter which in the transverse plane is represented by the slide **14d** visible in Figs. 5 to 7.

Due to the presence of the slide **14d,** when the inner body **14** moves away from the terminal **F** the jaws **13** are thrust further inwards, due to the presence of the slide **14d,** obtaining the final grip of the thread or of the shaping of the terminal F through the jaws.

According to what is shown, therefore, the end of the inner body 14 facing the coupling end **1a** of the coupling **1** presents, in cross section, a profile mated with the profile of the outer surface of said jaws **13.** According to what can be seen in particular in Figs. 5 to 7, the end of the inner body **14** which is inserted inside the female terminal **F** has, in a transverse plane, a profile characterized by a substantially flat indentation between the abutment **14b** and the slide **14d.** This structure of the inner body **14** facilitates insertion of the jaws **13** in their radial closing movement, according to what can be seen in Fig. 6.

Due to the structure of the coupling according to the present invention, grip of the female terminal is ensured even in the case of very high pressures.

Likewise, the spring **16** tends to automatically retract the inner body **14,** while the central connector **18** and the rear body **15** instead remain in position as they are integral with the central body **20** which remains abutting against the front surface of the terminal **F.** The pin **17** therefore slides in the grooves **14c** and the valve body **10** is positioned with respect to the inner body **14** in the optimal position from the viewpoint of fluid dynamics of the system.

In the coupled position shown in Fig. 7, the jaws **13** are once again maintained in the expanded gripping position also by abutting of the abutment **14b,** which makes release of the coupling impossible. As further guarantee an abutment line **18a** is provided on the outer surface of the central connector **18.** When coupling is performed correctly, the ring nut **21** translates towards the end **1b** of the coupling as the inner body 14, moved by the springs **12** and **16,** translates towards the retracted position. When the abutment **14b** of the inner body **14** is correctly positioned inside the groove **13b,** the ring nut is positioned, with one end thereof, along said abutment line 18a. In this manner, the operator has immediate and visual proof of the fact that coupling has taken place correctly.

Disconnection or release of the coupling according to the present invention takes place analogously through the thrust action of the operator on the ring nut **21.** The thrust action on the ring nut causes the inner body **14** to move forward, thus releasing the jaws **13,** which are again free to close as they are no longer radially constrained to remain in expanded position. To facilitate the thrust action of the ring nut by the operator gripping means for disconnection suitable to be grasped by the operator can conveniently be provided. Said gripping means can advantageously comprise a disconnection handle **19.** The presence of the disconnection handle **19** allows the operator to release the coupling using only one hand. In fact, the handle **19** is constrained to the central body **20** and to the central connector **18;** therefore, as relative movement of the inner body **14** with respect to the central body **20** against which the jaw **13** is abutting is required in order to cause disconnection of the coupling, the presence of the handle **19** facilitates this movement by the operator.

It has thus been shown how the quick coupling according to the present invention achieves the objects proposed.

In particular, it has been shown how the quick coupling according to the present invention allows acceleration of the operation of connection to a female terminal, threaded or provided with a similar coupling profile, allowing connection without requiring to perform screwing operations but simply through a substantially axial thrust movement.

A further object achieved by the quick coupling according to the present invention is to accelerate connection operations simultaneously offering a high level of safety.

According to what is illustrated, the coupling according to the present invention is suitable to function with high pressures, even in the order a hundreds of atmospheres.

Due to the presence of the jaws, easily replaceable, the device according to the present invention offers the advantage of being easily adaptable to different threads.

Moreover, a further object achieved by the present invention is that of having proved to be extremely reliable even in gripping threads with a wide range of dimensional tolerances.

Numerous modifications can be made by those skilled in the art without departing from the scope of protection of the present invention.

Therefore, the scope of protection of the claims must not be limited by the illustrations or by the preferred embodiments shown in the description by way of example, but rather the claims must comprise all those features of patentable novelty deducible from the present invention, including all features that would be treated as equivalents by those skilled in the art.

## Claims

1. A quick coupling (1) for connecting female threaded terminals (F) or terminals with a similar connection profile, of the type comprising a central body (20) suitable to abut against said terminal (F), a substantially hollow cylindrical inner body (14) defining therein a main duct (14a) extending substantially axially, and gripping means (13) provided at the end (1a) of said coupling intended to couple on said terminal (F), **characterized in that** said inner body (14) is axially movable with respect to said central body (20), said inner body being connected to an outer element (21) grippable by the user, so that when the central body (20) abuts against the terminal (F), the movement in axial direction of said external element (21) produces coupling or decoupling of said gripping means (13) on or from said terminal (F).

2. The quick coupling according to any one of the preceding claims, **characterized in that** said gripping means (13) are radially and axially movable.

3. The quick coupling (1) according to any one of the preceding claims, **characterized in that** said outer element is composed of a ring nut (21) with a substantially hollow cylindrical shape.

4. The quick coupling (1) according to the preceding claim, **characterized in that** said gripping means comprise a substantially hollow cylindrical element divided into at least two sectors (13) or jaws, said sectors or jaws (13) having at least one thread or similar connection profile suitable to produce a grip on the profile of said terminal (F).

5. The quick coupling (1) according to the preceding claim, **characterized in that** at the end of said inner body (14) facing the end (1 a) of said coupling designed to connect with said terminal (F), said inner body (14) is provided with an outer surface shaped in a manner to abut against the inner surface of said gripping jaws (13) according to a plurality of methods of relative positioning of said jaw (13) with respect to said inner body (14).

6. The quick coupling (1) according to the preceding claim, **characterized in that** said shaped outer surface of said inner body (14) is provided with a shaped profile suitable to guide said sectors or jaws (13) in their movements in radial and axial direction when said inner body (14) translates in axial direction.

7. The quick coupling (1) according to the preceding claim, **characterized in that** said shaped outer surface of said inner body (14) is provided with at least an annular abutment having in a longitudinal plane a substantially trapezoidal profile (14b) suitable to be inserted inside a corresponding annular groove (13b) also provided in a longitudinal plane with a substantially trapezoidal profile.

8. The quick coupling (1) according to the preceding claim, **characterized in that** said shaped outer surface of said inner body (14) also comprises at least a further variation of section which identifies in cross section an inclined surface (14d) suitable to function as a guide for radial expansion of said jaws (13) when said inner body (14) translates axially in the direction moving away from the terminal (F) to produce final clamping of the coupling.

9. The quick coupling (1) according to one or more of the preceding claims, **characterized in that** it also comprises a substantially hollow cylindrical central body (20, 18, 15) suitable to abut frontally against said threaded terminal (F) and which surrounds said inner body (14), which is sliding with respect to said cylindrical body in axial direction and at least partly contained therein.

10. The quick coupling (1) according to the preceding claim, **characterized in that** it also comprises externally to said central body (20, 18, 15) an outer element (21) having a hollow cylindrical shape, said central body (20, 18, 15) being positioned between said outer cylindrical element (21) and said inner body (14) which are mutually associated.

11. The quick coupling (1) according to any one of the preceding claims, **characterized in that** said inner body (14) is produced in one piece.

12. The quick coupling (1) according to one or more of the preceding claims, **characterized in that** it also comprises externally gripping means for disconnection (19), constrained to said central body (20).
